Europäisches Patentamt

(19) **European Patent Office**

Office européen des brevets

(11) Veröffentlichungsnummer: **0 313 715**
**B1**

(12) **EUROPÄISCHE PATENTSCHRIFT**

(45) Veröffentlichungstag der Patentschrift:
14.11.90

(51) Int. Cl.⁵: **C22B 34/12**, C01G 23/053,
C01B 17/90

(21) Anmeldenummer: 88101525.9

(22) Anmeldetag: 03.02.88

(54) **Verfahren zur energie- und materialsparenden Aufarbeitung der bei der Titandioxidherstellung nach dem Sulfatverfahren anfallenden Dünnsäure.**

(30) Priorität: 26.10.87 DE 3736111

(43) Veröffentlichungstag der Anmeldung:
03.05.89 Patentblatt 89/18

(45) Bekanntmachung des Hinweises auf die Patenterteilung:
14.11.90 Patentblatt 90/46

(84) Benannte Vertragsstaaten:
BE DE ES FR GB IT NL

(56) Entgegenhaltungen:
EP-A- 0 097 259
EP-A- 0 133 505
EP-A- 0 220 583
DE-A- 2 618 122
DE-C- 525 307
FR-A- 1 270 297
GB-A- 959 333
US-A- 1 707 248
US-A- 3 105 744

(73) Patentinhaber: KRONOS TITAN-Gesellschaft mbH,
Peschstrasse 5 Postfach 10 07 20,
D-5090 Leverkusen 1(DE)

(72) Erfinder: Kulling, Achim, Dr,, Ackerstrasse 21,
D-5068 Odenthal(DE)
Erfinder: Schinkitz, Dieter, Dr., Pfarrer-Jekel-Strasse 5,
D-5090 Leverkusen 3(DE)
Erfinder: Mauer, Josef, Dipl.-Ing., Talstrasse 55,
D-5090 Leverkusen 3(DE)
Erfinder: Steinhausen, Helmut, Dr.,
Carl-Leverkus-Strasse 8, D-5068 Odenthal(DE)

**Beschreibung**

Die Erfindung betrifft ein Verfahren zur energie- und materialsparenden Aufarbeitung der bei der Titandioxidherstellung nach dem Sulfatverfahren anfallenden Dünnsäure durch Ausnutzung der Wärme der bei der Calcinierung des Titandioxidhydrates anfallenden heißen Calcinierabgase zur Konzentrierung der Dünnsäure und Wiedergewinnung des in den Calcinierabgasen enthaltenen Titandioxids.

Nach dem Verfahren zur Herstellung von Titandioxid-Pigmenten durch Aufschluß von titanhaltigen Rohstoffen, z. B. Ilmenit und/oder titanhaltigen Schlacken, mit Schwefelsäure, das auch als "Sulfatverfahren" bezeichnet wird, werden die in den Rohstoffen enthaltenen Elemente bis auf geringe unlösliche Rückstände in entsprechende wasserlösliche Metallsulfate, hauptsächlich Sulfate des Titans und Eisens, verwandelt. Aus den geklärten Aufschlußlösungen wird das Titan durch hydrolytische Spaltung als Titandioxidhydrat ausgefällt, das danach abfiltriert, gewaschen, gebleicht und in üblicher Weise zum Pigment weiterverarbeitet wird.

Als Filtrat erhält man eine Lösung, die 20 bis 24 Gew. % $H_2SO_4$ sowie gelöste Metallsulfate enthält und als "Dünnsäure" bezeichnet wird.

Tabelle 1 zeigt eine typische Zusammensetzung einer aus dem Aufschluß von Ilmenit stammenden Dünnsäure:

## Tabelle 1

### Zusammensetzung der Dünnsäure

| Bestandteil | Konzentration (g/l) |
|---|---|
| Schwefelsäure | 304,1 (= 22,9 Gew. %) |
| Fe | 53,6 |
| Mg | 6,3 |
| Ti | 3,4 |
| Mn | 0,95 |
| Al | 0,53 |
| V | 0,59 |
| Ca | 0,42 |
| Cr | 0,26 |
| Spurenelemente | <0,03 |

Geht man von einer titanhaltigen Schlacke aus, die bis zu 85 Gew. % $TiO_2$ und dafür entsprechend weniger Eisen enthalten kann, so erhält man ähnlich zusammengesetzte Dünnsäuren, jedoch mit niedrigerem Eisengehalt.

Zur wirtschaftlichen Verwertung der Dünnsäure wurden Verfahren zu ihrer Konzentrierung entwickelt, wobei im folgenden die Erhöhung der Konzentration auf maximal 34 Gew. % $H_2SO_4$ als "Vorkonzentrierung" und die Erhöhung auf maximal 71 Gew. % $H_2SO_4$ als "Aufkonzentrierung" bezeichnet wird.

Bei der Aufkonzentrierung fällt ein wesentlicher Teil des gelösten Eisens und u. a. der die optischen Pigmenteigenschaften beeinträchtigenden Begleitelemente Chrom und Vanadium in Form ihrer Sulfate aus. Nach ihrer Abtrennung kann die aufkonzentrierte Säure in den Aufschluß der titanhaltigen Rohstoffe rückgeführt und wiederverwendet werden. Wenn der zum Aufschluß gelangende titanhaltige Rohstoff es erfordert, kann die aufkonzentrierte Säure vor der Rückführung noch höher konzentriert werden, z. B auf einen Gehalt von über 80 Gew. % $H_2SO_4$.

Es wurde bereits versucht, die Prozeßwärme zu verwerten, die als Wärmeinhalt heißer Abgase frei wird, die bei der Calcinierung von Titandioxidhydrat entstehen. Diese Abgase werden weiter als "Calcinierabgase" bezeichnet. Die zur Calcinierung des Titandioxidhydrates erforderliche Energie wird durch Verbrennung eines flüssigen oder gasförmigen Brennstoffes mit Luft in einer dem Calcinierofen vorgeschalteten Brennkammer erzeugt. Der Calcinierofen ist vorteilhaft als Drehrohrofen ausgestaltet.

Nach dem Verfahren der US-A 3.105.744 führt man einen Teil der heißen ungereinigten Calcinierabgase in die Brennkammer zurück, wodurch Brennstoff und Luft eingespart werden, das Gasvolumen verkleinert und die Staubmitführung aus dem Drehrohrofen vermindert wird. Eine Ausnutzung der Wärme der Calcinierabgase zur Konzentrierung von Dünnsäure ist bei diesem Verfahren nicht vorgesehen.

Nach dem Verfahren der EP-A 133 505 wird metallsulfathaltige Dünnsäure einer Konzentration von 23 bis 28 Gew. % Schwefelsäure in einer ersten Stufe unter Ausnutzung von Prozeßwärme auf max. 32 Gew. % $H_2SO_4$ vorkonzentriert. Gegf. dabei ausfallendes Eisen(II)-Sulfat-Heptahydrat kann abgetrennt werden. Die vorkonzentrierte Säure wird auf 62 bis 70 Gew. % $H_2SO_4$ aufkonzentriert, abgekühlt und nach Abtrennung der ausgefallenen Metallsalze (Sulfate) und gegf. einer zusätzlichen Höherkonzentrierung in den Aufschluß rückgeführt. Die Metallsalze werden thermisch gespalten und die dabei entstehenden Schwefeloxide zur Herstellung von Schwefelsäure bzw. Oleum veruendet. Als "Prozeßwärme" wird bei diesem Verfahren z. B. die bei der $SO_3$-Absorption freiwerdende Wärme verstanden. Eine Verwendung heißer Calcinierabgase zur Konzentrierung metallsalzhaltiger Dünnsäuren ist wegen des beim Eindampfen der Säuren auftetenden starken Spritzens und der Verkrustung der Anlagen nicht vorgesehen.

Nach dem Verfahren der EP-A 97 259, von der die vorliegende Anmeldung ausgeht, wird bei der Titandioxidherstellung nach dem Sulfatverfahren dadurch Energie eingespart, daß die bei der Calcinierung des Titandioxidhydrates entstehenden, etwa 400 bis 500 °C heißen, Schwefeloxide und staubförmiges Titandioxid enthaltenden, Calcinierabgase z. B. bei Temperaturen oberhalb 320 °C durch Filter oder elektrostatische Gasreinigung gereinigt werden und diese gereinigten Gase ganz oder teilweise in die Brennkammer rückgeführt bzw. mit der zu konzentrierenden Säure in Kontakt gebracht werden und ihre fühlbare Wärme z. B. zur Höherkonzentrierung einer ca. 65 Gew. %igen Schwefelsäure auf max. 85 Gew. % $H_2SO_4$ ausgenützt wird, woran sich gegf. als weitere Stufe die Eindampfung einer ca. 23 Gew. % $H_2SO_4$ enthaltenden Dünnsäure durch die nunmehr auf 150 bis 240 °C abgekühlten Gase anschließt.

Die Ausnutzung der Wärme ungereinigter, staubhaltiger, heißer Calcinierabgase zur Konzentrierung metallsulfathaltiger Dünnsäure durch direktes Inkontaktbringen der Abgase mit der Säure ist auch nach diesem Verfahren nicht praktikabel.

Es bestand daher die Aufgabe, ein Verfahren zur energie-und materialsparenden Aufarbeitung der bei der Titandioxidherstellung nach dem Sulfatverfahren anfallenden Dünnsäure durch Ausnutzung der Wärme der bei der Calcinierung des Titandioxidhydrates anfallenden heißen ungereinigten Calcinierabgase zur Konzentrierung der Dünnsäure und Wiedergewinnung des in den Calcinierabgasen enthaltenen Titandioxids zu entwickeln.

Die Aufgabe wurde erfindungsgemäß gelöst durch Bereitstellung eines gattungsgemäßen Verfahrens der beschriebenen Art.

Eine erste Ausführungsform des Verfahrens ist gekennzeichnet durch die Kombination folgender Stufen:

a) Dünnsäure, enthaltend 20 bis 24 Gew. % $H_2SO_4$, wird im Kreislauf mit heißen ungereinigten Calcinierabgasen in direkten Kontakt gebracht und auf eine Konzentration von 26 bis 29 Gew. % $H_2SO_4$ vorkonzentriert und die Konzentration dieser Säure durch Zufuhr weiterer Dünnsäure und ungereinigter Calcinierabgase in den Kreislauf konstant gehalten, wobei ein Rückstand entsteht, der im wesentlichen Titandioxid und Calciumsulfat enthält.

b) Die vorkonzentrierte Säure wird von dem Rückstand abgetrennt und der Rückstand mit Wasser gewaschen.

c) Der gewaschene Rückstand wird in den Prozeß der Titandioxidherstellung rückgeführt.

d) Die von dem Rückstand abgetrennte vorkonzentrierte Säure wird auf 20 bis 25 °C abgekühlt, wobei kristallwasserhaltige Metallsulfate ausfallen und der Gehalt der Säure auf 30 bis 35 Gew. % $H_2SO_4$ ansteigt.

e) Die kristallwasserhaltigen Metallsulfate werden von der 30 bis 35 Gew. % $H_2SO_4$ enthaltenden Säure abgetrennt.

f) Die 30 bis 35 Gew. % $H_2SO_4$ enthaltende Säure wird auf einen Gehalt von 60 bis 71 Gew. % $H_2SO_4$ aufkonzentriert, wobei weitere Metallsulfate ausfallen.

g) Die auf 60 bis 71 Gew. % $H_2SO_4$ aufkonzentrierte Säure wird von den ausgefallenen weiteren Metallsulfaten aboetrennt und in den Aufschluß titanhaltiger Rohstoffe rückgeführt.

Eine zweite Ausführungsform des Verfahrens ist gekennzeichnet durch die Kombination folgender Stufen:

a) Dünnsäure, enthaltend 20 bis 24 Gew. % $H_2SO_4$, wird im Kreislauf mit heißen ungereinigten Calcinierabgasen in direkten Kontakt gebracht und auf eine Konzentration von 26 bis 29 Gew. % $H_2SO_4$ vorkonzentriert und die Konzentration dieser Säure durch Zufuhr weiterer Dünnsäure und ungereinigter Calcinierabgase in den Kreislauf konstant gehalten, wobei ein Rückstand entsteht, der im wesentlichen Titandioxid und Calciumsulfat enthält.

b) Die vorkonzentrierte Säure wird von dem Rückstand abgetrennt und der Rückstand mit Wasser gewaschen.

c) Der gewaschene Rückstand wird in den Prozeß der Titandioxidherstellung rückgeführt.

d) Die von dem Rückstand abgetrennte vorkonzentrierte Säure wird auf einen Gehalt von 60 bis 71 Gew. % $H_2SO_4$ aufkonzentriert, wobei Metallsulfate ausfallen.

e) Die auf 60 bis 71 Gew. % $H_2SO_4$ aufkonzentrierte Säure wird von den ausgefallenen Metallsulfaten abgetrennt und in den Aufschluß titanhaltiger Rohstoffe rückgeführt.

Die erste Ausführungsform ist bei Vorliegen relatiy eisenreicher, z. B. aus Ilmenit stammender, Dünnsäuren zu wählen. Hierbei wird die vom Rückstand abgetrennte vorkonzentrierte Säure auf 10 bis 25 °C abgekühlt, wobei ein Gemisch kristallwasserhaltiger Metallsulfate ausfällt und abgetrennt wird (Stufen d) und e)), das im wesentlichen aus Eisen(II)-Sulfat-Heptahydrat besteht und in der Technik als "Grünsalz" bezeichnet wird.

Die zweite Ausführungsform ist bei Vorliegen relatir eisenarmer, z. B. aus eisenärmeren Titanerzen und/oder Schlacken stammenden, Dünnsäuren zu wählen. Hier entfällt die Zwischenabscheidung des Grünsalzes und die in Stufe b) anfallende, vom Rückstand abgetrennte, vorkonzentrierte Säure wird direkt auf einen Gehalt von 60 bis 71 Gew. % $H_2SO_4$ aufkonzentriert.

Anhand des Eisengehaltes der Dünnsäure ist es für den Fachmann leicht, zu entscheiden, welche Ausführungsform jeweils anzuwenden ist.

Die während der Calcinierung des Titandioxidhydrats durch den Drehrohrofen strömenden Verbrennungsgase reißen staubförmiges Titandioxid mit, so daß die den Ofen verlassenden heißen ungereinigten Calcinierabgase außer den Verbrennungsgasen, durchschnittlich etwa 15 bis 30 Vol. % Wasserdampf (bez. auf Normalbedingungen) und geringen Mengen an Schwefeloxiden auch noch ca. 0,8 g $TiO_2/Nm^3$ enthalten.

Ein Teil der ungereinigten 320 bis 400 °C heißen Calcinierabgase wird in den Drehrohrofen rückgeführt und dient zur Vorwärmung der Verbrennungsluft, der Hauptteil wird in einem direkten Gaskühler, z. B. einem Waschturm oder Venturiwäscher, in direkten Kontakt mit im Kreislauf geführter, 20 bis 24 Gew. % $H_2SO_4$ enthaltender, Dünnsäure gebracht, wodurch diese auf 26 bis 29 Gew. % $H_2SO_4$ vorkonzentriert wird.

Diese Säure wird weiter im Kreislauf geführt und verbleibt in direktem Kontakt mit ungereinigten Calcinierabgasen, wobei gleichzeitig eine solche Menge Dünnsäure zugeführt wird, daß die Säurekonzentration im Bereich von 26 bis 29 Gew. % $H_2SO_4$ konstant bleibt. Gleichzeitig wird durch Entzug eines Teils der im Kreislauf geführten Säure ihr Volumen konstant gehalten.

Bei beiden Ausführungsformen wird eine kostspielige Heißgasreinigung der ungereinigten Calcinierabgase vermieden. Die Calcinierabgase werden nach Abscheidung von mitgerissenem Kondensat sowie weiteren Reinigungsstufen zur Reduzierung des Gehaltes an Schwefeloxiden auf die amtlich zugelassenen Werte in die Atmosphäre entlassen.

Bei der Einwirkung der heißen ungereinigten Calcinierabgase auf die Säure erfolgt ein spontaner Wärmeaustausch, wobei unter Abkühlung der Calcinierabgase auf 80 bis 90 °C eine starke Wasserverdampfung eintritt und in der Lösung ein Rückstand entsteht, der im wesentlichen Titandioxid, ferner Calciumsulfat (in der Kristallform des Anhydrits) und geringe Mengen Siliciumdioxid enthält. Die in der Dünnsäure zu etwa 13 bis 15 Gew. % gelöst enthaltenen Metallsulfate, insbesondere das Eisen(II)-Sulfat, fallen in dieser Stufe nicht mit aus.

Der Rückstand wird abfiltriert und mit Wasser gewaschen, anstelle von Wasser kann auch eine schwach saure wässerige Waschlösung verwendet werden. Die Waschung des Rückstandes erfolgt in 2 ohne scharfen Übergang ineinander übergehenden Waschstufen von je etwa 60 min. Dauer.

In Waschstufe 1 (Vorwaschung) wird die dem Rückstand anhaftende, Schwefelsäure und Eisen(II)-Sulfat enthaltende, wässerige Lösung und in Waschstufe 2 (Endwaschung) der größte Teil, etwa 80 bis 90 %, des mit ausgefallenen Calciumsulfats aus dem Rückstand ausgewaschen.

Tabelle 2 zeigt typische Zusammensetzungen des gewaschenen und geglühten Rückstandes.

## Tabelle 2

| Bestandteile | Analyse des geglühten Rückstandes in Gew. % | |
|---|---|---|
| | nach Waschstufe 1 | nach Waschstufe 2 |
| $TiO_2$ | 79,5 | 96,1 |
| $CaSO_4$ | 19,0 | 2,4 |
| $SiO_2$ | 1,5 | 1,5 |

Der $TiO_2$-Bestandteil des Rückstandes besteht überwiegend aus partiell geglühtem Titandioxid, welches aus dem Flugstaub der Calcinierabgase stammt und zum geringeren Teil aus Titandioxidhydrat, das

4

von der Hydrolysestufe her in suspendierter Form in der Dünnsäure vorhanden war. Die Gehalte an Calciumsulfat und Kieselsäure stammen im wesentlichen aus den titanhaltigen Ausgangsrohstoffen.

Das in der Dünnsäure gelöst enthaltene Titandioxid bleibt in Lösung und wird in einer späteren Verfahrensstufe, zusammen mit den bei der Aufkonzentrierung ausfallenden Metallsulfaten, abgeschieden.

Bei den Verfahren gemäß dem Stande der Technik wird die Dünnsäure mit gereinigten, d. h. von Titandioxid befreiten, Calcinierabgasen in Kontakt gebracht, daher kann es hier nicht zur Bildung eines Titandioxid enthaltenden Niederschlages kommen, weshalb die Filtration in dieser Prozeßstufe entfällt. Damit bietet sich bei den bekannten Verfahren auch nicht die Möglichkeit, das in der vorkonzentrierten Säure suspendierte Titandioxid abzutrennen und wiederzugewinnen.

Das erfindungsgemäße Verfahren ermöglicht dagegen sowohl die Wiedergewinnung des mit den Calcinierabgasen in die Säure eingetragenen als auch des bereits in ihr suspendiert enthaltenen Titandioxids.

Es bietet darüber hinaus die Chance, mit dem Rückstand einen wesentlichen Teil des in der vorkonzentrierten Säure enthaltenen Calciumsulfats aus dem Prozeß auszuschleusen und damit unerwünschte Ausfällungen von Calciumsulfat in späteren Verfahrensstufen erheblich zu vermindern, denn ausgefallenes Calciumsulfat neigt dazu, in Rohren und Behältern Ansätze zu bilden, die den wirk samen Durchmesser und somit den Materialdurchfluß verkleinern. Die Ansätze platzen nach Erreichen einer bestimmten Dicke ab, wodurch es zur Verstopfung der im Leitungssystem enthaltenen Pumpen und Düsen durch abgesprengte Belagteile kommen kann. Die Abtrennung der vorkonzentrierten Säure vom Rückstand erfolgt durch Filtration, z. B. mit einer Filterpresse und in einer bevorzugten Ausführungsform mit einer Membranfilterpresse. Ein Teil des Calciumsulfats fällt bereits vor Erreichen der Presse aus. Er wird, vorzugsweise in einem zwischengeschalteten Vorratsbehälter, abgeschieden und mittels Pumpen der Membranfilterpresse zugeführt. Die Filtration erfolgt bei einer Temperatur von 50 bis 80 °C . Der von der vorkonzentrierten Säure abgetrennte Rückstand wird mit Wasser einer Temperatur von 20 bis 60 °C, vorzugsweise von 30 bis 50 °C, gewaschen. Die Waschung erfolgt in der Membranfilterpresse.

Der von der vorkonzentrierten Säure abgetrennte und gewaschene Rückstand wird in den TiO$_2$-Herstellungsprozeß rückgeführt.

In einer bevorzugten Ausgestaltung des Verfahrens wird der von der vorkonzentrierten Säure abgetrennte und gewaschene Rückstand in die Prozeßstufe der Bleichung des Titandioxidhydrats rückgeführt.

Die Bleichung ist eine Behandlung mit reduzierenden Mitteln, durch die das Titandioxidhydrat verunreinigende Schwermetalle in niedrige Wertigkeitsstufen überführt werden, deren Verbindungen mit wässerigen Lösungen ausgewaschen werden können. Das Siliciumdioxid als nichtfarbgebende Verunreinigung verbleibt mit dem Titandioxidhydrat im Rückstand und wird mit ihm zusammen zum Pigment aufgearbeitet. Es stört hierbei in der vorhandenen Menge nicht, da Siliciumverbindungen praxisübliche Substanzen für die Behandlung von TiO$_2$-Pigmenten sind.

Durch Wiedergewinnung des im Rückstand enthaltenen TiO$_2$-Anteils und Nutzbarmachung für die Titandioxidgewinnung ist das erfindungsgemäße Verfahren äußerst materialsparend.

Die vom Rückstand abgetrennte, 26 bis 29 Gew. % H$_2$SO$_4$ enthaltende, vorkonzentrierte Säure wird, falls ihr Eisengehalt das erfordert, auf eine Temperatur von 10 bis 25 °C abgekühlt, wobei das bereits erwähnte Grünsalz ausfällt, das abgetrennt wird. Es enthält nur noch ca. 0,1 Gew. % Calciumsulfat, bildet klare wässerige Lösungen und ist für technische Zwecke, wie z. B. die Behandlung kommunaler und industrieller Abwässer, ohne zusätzliche Reinigung verwendbar.

Ohne die vorherige Abtrennung des Titandioxids und Calciumsulfats in Form des Rückstandes enthielte das Grünsalz noch ca. 1 Gew. % Calciumsulfat und ca. 3 Gew. % TiO$_2$ und wäre für die Behandlung von Abwässern nicht verwendbar, es müßte dann im wesentlichen auf dem Wege über eine thermische Spaltung oder Neutralisation aufgearbeitet werden.

Durch die Abscheidung des kristallwasserreichen Grünsalzes sowie Verdampfung von Wasser steigt die Konzentration der vorkonzentrierten Säure auf 30 bis 35 Gew. % H$_2$SO$_4$.

Die vorkonzentrierte Säure wird, je nach Ausführungsform, gegf. nach Abtrennung des Grünsalzes, in einer weiteren Verfahrensstufe auf einen Gehalt von 60 bis 71 Gew. % H$_2$SO$_4$ aufkonzentriert, z. B. in bekannter Weise in einem Vakuumumlaufverdampfer, wobei Metallsulfate ausfallen, bei denen es sich im wesentlichen um ein Gemisch kristallwasserarmer Sulfate, in der Hauptsache Eisen(II)-Sulfat-Monohydrat, handelt, das in der Technik als "Filtersalz" bezeichnet wird. Die entstehende Filtersalzsuspension läßt man mit Vorteil in einem Verweilzeitbehälter, z. B. einer mehrstufigen Rührkesselkaskade, abkühlen ("reifen"), wobei neben einer Abreicherung der farbgebenden Begleitelemente in der Lösung eine Vergrößerung der ausgefallenen Sulfatkristalle stattfindet und die anschließende Abtrennung des Filtersalzes erleichtert wird.

Die abgetrennte aufkonzentrierte Säure wird in den Rohstoffaufschluß rückgeführt. Das Filtersalz kann thermisch gespalten, das im Spaltgas enthaltene Schwefeldioxid zu Schwefeltrioxid oxidiert und dieses zu hochprozentiger Schwefelsäure bzw. Oleum verarbeitet werden. Der aus schwerlöslichen Oxiden bestehende Röstrückstand kann deponiert werden.

Alternatiy kann das Filtersalz mit basischen Verbindungen, z. B. des Calciums, neutralisiert werden.

Das in der Dünnsäure gelöste Calciumsulfat weist außer der Tendenz zur Bildung festhaftender Verkrustungen eine weitere nachteilige Eigenschaft auf: Es neigt zur Bildung übersättigter Lösungen, auch in Gegenwart von Schwefelsäure und/oder gelösten Metallsulfaten. So wird z. B. schon bei der Vorkonzentrierung der Dünnsäure auf etwa 28 Gew. % $H_2SO_4$ die Sättigungskonzentration des Calciumsulfats erheblich überschritten, dennoch fällt nur ein Teil des die Löslichkeit übersteigenden Calciumsulfats aus. Die Übersättigung hängt von einer Reihe von Faktoren ab, die z. Tl. nicht näher definierbar sind, z. B. der Verweilzeit im Leitungs- und Apparatesystem, der Säurekonzentration, der Anzahl der anwesenden, die $CaSO_4$- Ausfällung fördernden, Keime sowie von apparativen Einflußgrößen wie der Rauhigkeit der Rohrinnenwände und dem Maß an Turbulenz in der Strömung.

Problemen durch Ansatzbildung in Gefäßen und Leitungen in der Aufkonzentrierungsstufe kann durch Auswahl geeigneter Gefäßmaterialien (z. B. Polypropylen, Polyvinyliden fluorid, Teflon usw.) und Ausbildung glatter Rohrinnenwände in gewissem Maße begegnet werden. Um spätere Nachfällungen und die Menge des gelöst in der aufkonzentrierten Säure in den Rohstoffaufschluß rückgeführten Calciumsulfats möglichst gering zu halten, kann man der vorkonzentrierten Säure, z. B. vor Eintritt in die Filterpresse, geringe Mengen Anhydrit-Keime zusetzen.

Diese Keime zur Bildung von Anhydrit werden durch Umsetzung einer Lösung eines Calciumsalzes mit Schwefelsäure, Rühren in der Wärme, Abfiltrieren, Waschen und Trocknen des gebildeten Niederschlages erzeugt.

Die Erfindung wird nachfolgend durch Beispiele erläutert, wobei zu bemerken ist, daß den Lösungen gemäß Beispielen 1 bis 5 keine Anhydrit-Keime zugesetzt wurden.

Beispiel 1

Für die Calcinierung von 1 to $TiO_2$ wurden 364 Nm³/h Heizgas benötigt. Durch geeigneten Wärmeaustausch der Reaktionsprodukte, d. h. des calcinierten Titandioxids und der ungereinigten Calcinierabgase, z. B. durch Vorwärmung der Verbrennungsluft und teilweise Rückführung der ungereinigten Calcinierabgase in den Drehrohrofen, wurde der Verbrauch auf 309 Nm³/h Heizgas je t $TiO_2$ gesenkt. Das entsprach einer Einsparung an Heizenergie von 15,1 %.

Beispiel 2

Unter Anwendung der energiesparenden Maßnahme aus Beispiel 1 wurden in einem Drehrohrofen 2.2 t $TiO_2$/h calciniertes Titandioxid erzeugt, wozu eine Heizgasmenge von 680 Nm³/h erforderlich war, entsprechend 9,83·10⁹ J/t $TiO_2$. Die Menge der entstehenden Calcinierabgase betrug 21 000 Nm³/h (feucht) und ihr Feuchtigkeitsgehalt 27,5 Vol. % $H_2O$.

Die heißen ungereinigten Calcinierabgase wurden mittels eines Gebläses in einen Waschturm eingeführt und hier in Kontakt mit einer auf 28 Gew. % $H_2SO_4$ vorkonzentrierten Dünnsäure aus der Titandioxidherstellung gebracht. Der Waschturm war als Strahlwäscher ausgebildet, von dessen Unterteil 28 Gew. %ige Säure abgezogen und über eine Kreiselpumpe durch eine am Kopf axial angebrachte Düse wieder in den Strahlwäscher rückgeführt wurde. In diesen Kreislauf wurden 10,1 m³ Dünnsäure/h eines Gehaltes von 23 Gew. % $H_2SO_4$ und einer Temperatur von 60 °C zugeführt und gleichzeitig 7,8 m³/h der auf 28 Gew. % $H_2SO_4$ vorkonzentrierten Säure abgezogen. Die abgezogene Menge an $H_2SO_4$ war etwas größer als die in Form der 23 Gew. %igen Säure zugeführte Menge, was sich daraus erklärt, daß die ungereinigten Calcinierabgase einen Anteil an $SO_3$/$H_2SO_4$ enthielten, der beim Auswaschen mit in den Säurekreislauf gelangte.

Es verdampften 2,7 t Wasser/h, wovon 2,4 t/h aus der Dünnsäure und 0,3 t/h aus der Spülung der nachgeschalteten Kondensatabscheider stammten. Die Temperatur der abfließenden, auf 28 Gew. % $H_2SO_4$ vorkonzentrierten, Säure betrug 88 °C und die des Abgases beim Verlassen des Strahlwäschers 94 °C. Dieses Abgas enthielt 35,4 Vol. % Wasser, entsprechend einem Taupunkt von ca. 70 °C. Bei dieser Verfahrensweise wurde eine Kondensation von Wasserdampf bei der nachgeschalteten Abgasfeinreinigung vermieden.

Die abgegebene Wärmemenge betrug 1,7·10⁶ kcal/h, entsprechend 3,36.10⁹ J/t $TiO_2$. Daraus berechnet sich eine Energieeinsparung bei der Vorkonzentrierung der Dünnsäure mit den heißen ungereinigten Calcinierabgasen gemäß Beispiel 2 von 34,2 %.

Somit konnten nach der Verfahrensweise gemäß Beispielen 1 und 2 insgesamt 49,3 % der für die Calcinierung einge setzten Heizenergie eingespart bzw. wiederverwendet werden.

Beispiel 3

Dieses Beispiel gibt anhand von Tabelle 4 einen überblick über die bei der Vorkonzentrierung von Dünnsäure mit ungereinigten Calcinierabgasen ausfallende Menge an Calcium.

Tabelle 4

| Ort der Probe-nahme | Konzentration der Säure $H_2SO_4$ (Gew. %) | Menge des in der Säure gelösten Calciums, berechnet als Ca | |
|---|---|---|---|
| | | Gew. % | g Ca/kg $H_2SO_4$ |
| Dünnsäure | 23,0 | 0,0315 | 1,37 |
| vorkonz. Säure im Kreislauf | 27,5 | 0,036 | 1,30 |
| vorkonz. Säure unmittelbar vor Filtration | 27,5 | 0,025 | 0,89 |

Die Menge des während der Vorkonzentrierung bis zur Filtration ausgefallenen Calciums betrug in diesem Beispiel 0,48 g Ca pro kg $H_2SO_4$, das sind 35 % der in der Dünnsäure ursprünglich gelösten Calciummenge.

Beispiel 4

Tabelle 5 gibt eine Bilanz der Abscheidung von in der Dünnsäure gelöstem Calciumsulfat vom Beginn der Vorkonzentrierung bis zum Ende der Aufkonzentrierung.

Tabelle 5

| Probenahme | Eingesetzte Säure | | Anteil an Calcium | | |
| | Menge t | $H_2SO_4$-Konzentr. Gew. % | in der Säure gelöst | | ausgefalle |
| | | | ppm Ca. | kg $CaSO_4$ | kg $CaSO_4$ |
|---|---|---|---|---|---|
| vor Vorkonzentrierung | 1030 | 23,0 | 315 | 1100 | - |
| nach Vorkonzentrierung | 860 | 27,5 | 360 | 1040 | 60 |
| vor Filtration | 860 | 27,5 | 245 | 715 | 325 |
| nach Filtration | 860 | 27,5 | 245 | 715 | - |
| Nach Abscheidung d. Grünsalzes | 695 | 34,0 | 284 | 671 | 44 |
| nach Aufkonzentrierung u. Abscheidung d. Filtersalzes | 290 (14 % $H_2SO_4$-Verlust im Filtersalz) | 70,0 | 146 (Säure ist an Ca übersättigt) | 144 | · 527 |

Die Tabelle besagt folgendes:

Die zur Vorkonzentrierung gelangenden 1030 t Dünnsäure enthielten 1100 kg gelöstes $CaSO_4$. Davon fielen während der Vorkonzentrierung 60 kg aus. Von den in Lösung verbliebenen 1040 kg $CaSO_4$ fielen auf dem Wege von der Vorkonzentrierung zur Filterpresse (Abtrennung des Rückstandes) weitere 325 kg aus. Sodann wurden 44 kg mit dem Grünsalz und weitere 527 kg mit dem Filtersalz abgeschieden. Somit verblieben in der auf 70 Gew. % $H_2SO_4$ aufkonzentrierten Säure noch 144 kg $CaSO_4$ gelöst, die mit der Säure in den Aufschluß der Titanrohstoffe rückgeführt wurden.

Hiernach wurden während der Vor- und Aufkonzentrierung 87 Gew. % des ursprünglich in der Dünnsäure enthaltenen Calciumsulfats abgeschieden und abgetrennt.

Im Vergleich zum Filtersalz fiel hierbei wenig $CaSO_4$ mit dem Grünsalz aus, dieses war also relativ gering verunreinigt.

Beispiel 5

Dieses Beispiel gibt anhand der Tabelle 6 einen Überblick über die Änderung von Dichte sowie Gehalt an Schwefelsäure und Eisen bei der teilweisen Abscheidung des Eisens durch Grünsalzabscheidung beim Abkühlen der vorkonzentrierten Säure.

Tabelle 6

| Vorkonzentrierte Säure | Temp. ($^{o}$C) | Dichte (g/cm$^3$) | Gehalt (Gew. %) | |
|---|---|---|---|---|
| | | | $H_2SO_4$ | Fe (gelöst) |
| vor Eisen(II)-Abscheidung | 30 | 1,395 | 27,0 | 4,70 |
| nach Eisen(II)-Abscheidung | 20 | 1,371 | 31,9 | 2,71 |

Die Menge des in der vorkonzentreirten Säure gelösten Eisens wurde durch die Grünsalzabscheidung somit um 42 % verringert. Diese angegebenen Werte sind Mittelwerte aus einer Reihe von Einzelbestimmungen.

Beispiel 6

Tabelle 7 gibt anhand von Laborversuchen einen Überblick über den Abbau der Übersättigung an gelöstem $CaSO_4$ in vorkonzentrierten Säuren, denen Anhydrit-Keime zugesetzt wurden, nach 4- bzw. 200-stündigem Rühren bei verschiedenen Temperaturen.

Es wurden jeweils 1700 g Dünnsäure (23 Gew. % $H_2SO_4$) auf einen Gehalt von 28 Gew. % $H_2SO_4$ vorkonzentriert, die Lösungen auf die in Tabelle 7 angegebenen jeweiligen Temperaturen eingestellt, 1 g Anhydrit-Keime zugegeben, die Lösungen 4 h bzw. 200 h bei diesen Temperaturen gehalten und der ausgefallene Anhydrit abfiltriert.

Die Ausgangskonzentration an Calcium in der vorkonzentrierten Säure betrug 300 ppm Ca, die Gleichgewichtskonzentrationen sind in Tabelle 7 angegeben.

Tabelle 7

| Gleichgewichtskonzentration | Temperatur $^{o}$C | | |
|---|---|---|---|
| | 55 | 75 | 90 |
| ppm Ca nach 4h | 190 | 170 | 150 |
| ppm Ca nach 200 h | 120 | 140 | 130 |

In Beispiel 7 wird die Herstellung der Anhydrit-Keime beschrieben.

Beispiel 7

Zu 1 l einer 0,2 molaren Lösung von Calciumchlorid wurden aus einem Tropftrichter unter langsamem Rühren 730 ml (1343 g) 96 Gew. %ige Schwefelsäure zugegeben, dann wurde die Mischung 5 h lang bei einer Temperatur von 70 °C gerührt, nach halbstündigem Absetzen filtriert und der Filterrückstand mit Wasser gewaschen und bei 110 °C getrocknet. Eine Strukturanalyse ergab, daß er aus Anhydrit bestand. Er war als Keimmaterial für die Ausfällung von Anhydrit aus vorkonzentrierter Dünnsäure geeignet.

**Patentansprüche**

1. Verfahren zur energie- und materialsparenden Aufarbeitung der bei der Titandioxidherstellung nach dem Sulfatverfahren anfallenden Dünnsäure durch Ausnutzung der Wärme der bei der Calcinierung des Titandioxidhydrates anfallenden heißen Calcinierabgase zur Konzentrierung der Dünnsäure und Wiedergewinnung des in den Calcinierabgasen enthaltenen Titandioxids, gekennzeichnet durch die Kombination folgender Stufen:

a) Dünnsäure, enthaltend 20 bis 24 Gew.-% $H_2SO_4$, wird im Kreislauf mit heißen ungereinigten Calcinierabgasen in direkten Kontakt gebracht und auf eine Konzentration von 26 bis 29 Gew.-% $H_2SO_4$ vorkonzentriert und die Konzentration dieser Säure durch Zufuhr weiterer Dünnsäure und ungereinigter Calcinierabgase in den Kreislauf konstant gehalten, wobei ein Rückstand entsteht, der im wesentlichen Titandioxid und Calciumsulfat enthält.

b) Die vorkonzentrierte Säure wird von dem Rückstand abgetrennt und der Rückstand mit Wasser gewaschen.

c) Der gewaschene Rückstand wird in den Prozeß der Titandioxidherstellung rückgeführt.

d) Die von dem Rückstand abgetrennte vorkonzentrierte Säure wird auf einen Gehalt von 60 bis 71 Gew.-% $H_2SO_4$ aufkonzentriert, wobei Metallsulfate ausfallen.

e) Die auf 60 bis 71 Gew.-% $H_2SO_4$ aufkonzentrierte Säure wird von den ausgefallenen Metallsulfaten abgetrennt und in den Aufschluß titanhaltiger Rohstoffe rückgeführt.

2. Verfahren nach Anspruch 1, dadurch gekennzeichnet, daß die in Stufe b) abgetrennte Säure wie folgt aufkonzentriert wird:

d) Die von dem Rückstand abgetrennte vorkonzentrierte Säure wird auf 10 bis 25°C abgekühlt, wobei kristallwasserhaltige Metallsulfate ausfallen und der Gehalt der Säure auf 30 bis 35 Gew.-% $H_2SO_4$ ansteigt.

e) Die kristallwasserhaltigen Metallsulfate werden von der 30 bis 35 Gew.-% $H_2SO_4$ enthaltenden Säure abgetrennt.

f) Die 30 bis 35 Gew.-% $H_2SO_4$ enthaltende Säure wird auf einen Gehalt von 60 bis 71 Gew.-% $H_2SO_4$ aufkonzentriert, wobei weitere Metallsulfate ausfallen.

g) Die auf 60 bis 71 Gew.-% $H_2SO_4$ aufkonzentrierte Säure wird von den ausgefallenen weiteren Metallsulfaten abgetrennt und in den Aufschluß titanhaltiger Rohstoffe rückgeführt.

3. Verfahren nach Ansprüchen 1 und 2, dadurch gekennzeichnet, daß die vorkonzentrierte Säure von dem Rückstand mit einer Filterpresse abgetrennt wird.

4. Verfahren nach Ansprüchen 1 bis 3, dadurch gekennzeichnet, daß die vorkonzentrierte Säure von dem Rückstand mit einer Membranfilterpresse abgetrennt wird.

5. Verfahren nach Ansprüchen 1 bis 4, dadurch gekennzeichnet, daß die Filtration der vorkonzentrierten Säure bei einer Temperatur von 50 bis 80°C erfolgt.

6. Verfahren nach Ansprüchen 1 bis 5, dadurch gekennzeichnet, daß der von der vorkonzentrierten Säure abgetrennte Rückstand mit Wasser einer Temperatur von 20 bis 60°C, vorzugsweise von 30 bis 50°C, gewaschen wird.

7. Verfahren nach Ansprüchen 1 bis 6, dadurch gekennzeichnet, daß die Waschung des abgetrennten Rückstandes in einer Membranfilterpresse erfolgt.

8. Verfahren nach Ansprüchen 1 bis 7, dadurch gekennzeichnet, daß der von der vorkonzentrierten Säure abgetrennte und gewaschene Rückstand in den $TiO_2$-Herstellungsprozeß rückgeführt wird.

9. Verfahren nach Ansprüchen 1 bis 8, dadurch gekennzeichnet, daß der von der vorkonzentrierten Säure abgetrennte und gewaschene Rückstand in die Prozeßstufe der Bleichung des Titandioxidhydrates rückgeführt wird.

10. Verfahren nach Ansprüchen 1 bis 9, dadurch gekennzeichnet, daß die von der aufkonzentrierten Säure abgetrennten Metallsulfate thermisch gespalten und die Spaltgase zu hochprozentiger Schwefelsäure verarbeitet werden.

11. Verfahren nach Ansprüchen 1 bis 9, dadurch gekennzeichnet, daß die von der aufkonzentrierten Säure abgetrennten Metallsulfate neutralisiert werden.

12. Verfahren nach Ansprüchen 1 bis 11, dadurch gekennzeichnet, daß während der Vor- und Aufkonzentrierung mindestens 80 Gew.-% des ursprünglich in der Dünnsäure enthaltenen Calciumsulfats abgeschieden und abgetrennt werden.

13. Verfahren nach Ansprüchen 1 bis 12, dadurch gekennzeichnet, daß der vorkonzentrierten Säure Anhydrit-Keime zugesetzt werden.

14. Verfahren nach Ansprüchen 1 bis 13, dadurch gekennzeichnet, daß die Anhydrit-Keime durch Umsetzung einer Lösung eines Calciumsalzes mit Schwefelsäure, Rühren in der Wärme, Abfiltrieren, Waschen und Trocknen des gebildeten Niederschlages erhalten werden.

## Revendications

1. Procédé économe en énergie et en matières pour le traitement de l'acide dilué se formant au cours de la fabrication du dioxyde de titane selon le procédé au sulfate par mise à profit de la chaleur des gaz d'échappement de calcination chauds produits lors de la calcination de l'hydrate de dioxyde de titane en vue de la concentration de l'acide dilué et de la récupération du dioxyde de titane contenu dans les gaz d'échappement de calcination, caractérisé par la combinaison des étapes suivantes:

a) l'acide dilué contenant 20 à 24% en poids d'$H_2SO_4$ est mis en contact direct, en circuit fermé, avec des gaz d'échappement de calcination non épurés chauds et préconcentré à une concentration de 26 à 29% en poids d'$H_2SO_4$ et la concentration de cet acide est maintenue constante par apport dans le circuit d'acide dilué supplémentaire et de gaz d'echappement de calcination non épurés, moyennant quoi il se forme un résidu contenant essentiellement du dioxyde de titane et du sulfate de calcium.

b) L'acide préconcentré est séparé du résidu et le résidu est lavé à l'eau.

c) Le résidu lavé est renvoyé dans le procédé de fabrication de dioxyde de titane.

d) L'acide préconcentré séparé du résidu est concentré jusqu'à une teneur de 60 à 71% en poids d'$H_2SO_4$, auquel cas il précipite des sulfates métalliques.

e) L'acide concentré jusqu'à 60 à 71% en poids d'$H_2SO_4$ est séparé des sulfates métalliques précipités et est recyclé dans la digestion des matières de départ titanifères.

2. Procédé selon la revendication 1, caractérisé en ce que l'acide séparé dans l'étape b) est concentré comme suit:

d) l'acide préconcentré séparé du résidu est refroidi à 10–25°C, auquel cas il précipite des sulfates métalliques contenant de l'eau de cristallisation et la teneur en acide s'élève à 30–35% en poids d'$H_2SO_4$

e) Les sulfates métalliques contenant de l'eau de cristallisation sont séparés de l'acide contenant 30 à 35% en poids d'$H_2SO_4$.

i) L'acide contenant 30 à 35% en poids d'$H_2SO_4$ est concentré jusqu'à une teneur de 60 à 71% en poids d'$H_2SO_4$, opération pendant laquelle il précipite des sulfates métalliques supplémentaires.

g) L'acide concentré jusqu'à 60 à 71% en poids d'$H_2SO_4$ est séparé des sulfates métalliques supplémentaires précipités et recyclé dans la digestion des matières de départ titanifères.

3. Procédé selon les revendications 1 et 2, caractérisé en ce que l'acide préconcentré est séparé du résidu au moyen d'un filtre-presse.

4. Procédé selon les revendications 1 à 3, caractérisé en ce que l'acide préconcentré est séparé du résidu à l'aide d'un filtre-presse à membrane.

5. Procédé selon les revendications 1 à 4, caractérisé en ce que la filtration de l'acide préconcentré a lieu à une température de 50 à 80°C.

6. Procédé selon les revendications 1 à 5, caractérisé en ce que le résidu séparé de l'acide préconcentré est lavé avec de l'eau à une température de 20 à 60°C, de préférence de 30 à 50°C.

7. Procédé selon les revendications 1 à 6, caractérisé en ce que le lavage du résidu séparé a lieu dans un filtre-presse à membrane.

8. Procédé selon les revendications 1 à 7, caractérisé en ce que le résidu séparé de l'acide préconcentré et lavé est recyclé dans le procédé de fabrication de $TiO_2$.

9. Procédé selon les revendications 1 à 8, caractérisé en ce que le résidu séparé de l'acide préconcentré et lavé est recyclé dans la phase opératoire de décoloration de l'hydrate de dioxyde de titane.

10. Procédé selon les revendications 1 à 9, caractérisé en ce que les sulfates métalliques séparés de l'acide concentré sont scindés thermiquement et que les gaz de scission sont transformés en acide sulfurique fortement concentré.

11. Procédé selon les revendications 1 à 9, caractérisé en ce que les sulfates métalliques séparés de l'acide concentré sont neutralisés.

12. Procédé selon les revendications 1 à 11, caractérisé en ce que, pendant la préconcentration et la concentration, au moins 80% en poids du sulfate de calcium initialement présent dans l'acide dilué sont précipités et séparés.

13. Procédé selon la revendications 1 à 12, caractérisé en ce que l'acide préconcentré est additionné de germes d'anhydrite.

14. Procédé selon les revendications 1 à 13, caractérisé en ce que les germez d'anhydrite sont obtenus par réaction d'une solution d'un sulfate de calcium avec de l'acide sulfurique, agitation à chaud, séparation par filtration, lavage et séchage du précipité formé.

**Claims**

1. Process for the energy- and material-conserving reprocessing of waste acid that is obtained in the production of titanium dioxide by the sulphate route, by utilizing the heat of the hot calciner exhaust gases obtained in the calcination of the titanium dioxide hydrate for the purpose of concentrating the waste acid and recovering the titanium dioxide contained in the calciner exhaust gases, comprising the combination of the following steps:

a) Waste acid containing between 20 and 24% by weight $H_2SO_4$ is recycled in direct contact with hot, unpurified calciner exhaust gases and preconcentrated to between 26 and 29% by weight $H_2SO_4$; the concentration of this acid is kept constant by adding further waste acid and unpurified calciner exhaust gases to the recycling waste acid, a residue being formed that contains essentially titanium dioxide and calcium sulphate.

b) The preconcentrated acid is separated from the residue and the residue is washed with water.

c) The washed residue is returned into the process of titanium dioxide production.

d) The preconcentrated waste acid separated from the residue is further concentrated to between 60 and 71% by weight $H_2SO_4$, metal sulphates being precipitated.

e) The acid further concentrated to between 60 and 71% by weight $H_2SO_4$ is separated from the precipitated metal sulphates and returned to the digestion of the titaniferous raw materials.

2. Process according to Claim 1 comprising further concentrating the acid separated in step b), as follows:

d) The preconcentrated waste acid separated from the residue is cooled down to between 10 and 25°C, water-of-crystallization-containing metal sulphates being precipitated and the $H_2SO_4$ concentration of the acid rising to between 30 and 35% by weight.

e) The metal sulphates that contain the water of crystallization are separated from the acid that contains between 30 and 35% by weight $H_2SO_4$.

f) The acid that contains between 30 and 35% by weight $H_2SO_4$ is further concentrated to between 60 and 71% by weight, additional metal sulphates being precipitated.

g) The acid further concentrated to between 60 and 71% by weight $H_2SO_4$ is separated from the precipitated additional metal sulphates and returned to the digestion of the titaniferous raw materials.

3. Process according to Claims 1 and 2 comprising separating the preconcentrated acid from the residue by means of a filter press.

4. Process according to Claims 1 to 3, comprising separating the preconcentrated acid from the residue by means of a membrane filter press.

5. Process according to Claims 1 to 4, comprising carrying through the filtration of the preconcentrated acid at a temperature between 50 and 80°C.

6. Process according to Claims 1 to 5 comprising washing the residue separated from the preconcentrated acid with water of a temperature between 20 and 60°C, preferably between 30 and 50°C.

7. Process according to Claims 1 to 6 comprising carrying through the washing of the separated residue in a membrane filter press.

8. Process according to Claims 1 to 7 comprising returning the residue separated from the preconcentrated acid and washed, into the $TiO_2$ production process.

9. Process according to Claims 1 to 8 comprising returning the residue separated from the preconcentrated acid and washed, into the process step of bleaching of the titanium dioxide hydrate.

10. Process according to Claims 1 to 9 comprising thermally decomposing the metal sulphates separated from the further concentrated acid and reprocessing the decomposition gases to high-percentage sulphuric acid.

11. Process according to Claims 1 to 9 comprising neutralizing the metal sulphates separated from the further concentrated acid.

12. Process according to Claims 1 to 11 comprising precipitating and separating, during the preconcentration and further concentration of the waste acid, at least 80% by weight of the calcium sulphate originally contained in the waste acid.

13. Process according to Claims 1 to 12 comprising adding anhydrite nuclei to the preconcentrated acid.

14. Process according to Claims 1 to 13 comprising producing the anhydrite nuclei by reacting a solution of a calcium salt with sulphuric acid, agitating it under heat and filtering, washing and drying the precipitate thus formed.